# EUROPÄISCHE PATENTANMELDUNG

(11) **EP 3 715 067 A2**
(43) Veröffentlichungstag der Anmeldung: **30.09.2020**
(21) Anmeldenummer: 20161300.7
(22) Anmeldetag: 05.03.2020
(51) Int. Cl.: B25J 15/00, B25J 9/16

(54) **GREIFVORRICHTUNG, VEREINZELUNGSVORRICHTUNG SOWIE VERFAHREN ZUM GREIFEN VON KÖRPERN UND VERWENDUNG EINER GREIFVORRICHTUNG**

(30) Priorität: 07.03.2019 DE 102019105841
(71) Anmelder: Zahoransky AG, 79674 Todtnau (DE)
(72) Erfinder: Kiefer, Florian, 79677 Fröhnd (DE); Kumpf, Ingo, 79674 Schlechtnau (DE); König, Marc, 79100 Freiburg (DE)
(74) Vertreter: Mertzlufft-Paufler, Cornelius

(57) **Zusammenfassung**

Die Erfindung befasst sich mit Verbesserungen auf dem technischen Gebiet der Handhabung von Rohteilen, Halbzeugen oder auch von fertigen Produkten in vorzugsweise automatisierten Fertigungsprozessen. Hierzu wird unter anderem die Greifvorrichtung (3) vorgeschlagen, die den Greifer (4) aufweist. Dem Greifer (4) ist der Abstreifer (5) der Greifvorrichtung (3) zugeordnet, der wenigstens ein Abstreifelement (6) aufweist. Das Abstreifelement (6) kann bei Bedarf in einer Abstreifbewegung zwischen einer Ausgangsstellung und einer Endstellung an dem Greifer (4) vorbeibewegt werden, um den Greifprozess möglicherweise störende Körper (2) aus einem Greifbereich des Greifers (4) zu entfernen. Dies geschieht insbesondere dann, wenn der Greifer (4) bereits einen zu greifenden Körper (2) gegriffen hat (vgl. Figur 1).

## Beschreibung

Die Erfindung betrifft Greifvorrichtungen mit zumindest einem Greifer zum Greifen von bereitgestellten Körpern, eine Vereinzelungsvorrichtung mit zumindest einer Greifvorrichtung, ein Verfahren zum Greifen bereitgestellter Körper sowie die Verwendung einer Greifvorrichtung zum Greifen länglicher Körper.

Greifvorrichtungen der eingangs genannten Art sind aus dem Stand der Technik in unterschiedlichen Ausführungsformen vorbekannt. So offenbart etwa die Druckschrift DE 38 17 465 A1 eine Vorrichtung zum Zuführen von Werkstücken für eine Verwendung bei Robotern mit wenigstens einem optisch gesteuerten Greifer zur Abnahme der auf einer Ablage angeordneten Werkstücke. Aus DE 83 15 322 U1 ist eine Vorrichtung zum maschinellen Zuführen von Bürstenkörpern zu einer Stopfmaschine vorbekannt. Bei dieser Vorrichtung ist vorgesehen, dass bei einem Bürstenkörper-Vorrat eine Dosiervorrichtung angeschlossen ist, die Einrichtungen zumindest zum Vordosieren sowie Feindosieren von jeweils einer Anzahl von Bürstenkörpern aufweist. Die Druckschrift DE 25 56 710 A1 offenbart eine Hilfsvorrichtung für die Bürstenherstellung. Die Hilfsvorrichtung weist einen Aufnahmebehälter oder dergleichen Zuführelemente für die Bürstenkörper und eine darin eingreifende Entnahme- und Transporteinrichtung auf. Innerhalb des Transportweges der Bürstenkörper ist wenigstens eine Lagekorrektur- und/oder Ausscheideeinrichtung vorgesehen, der zumindest eine Abgabestation, zum Beispiel ein Magazin oder eine Spannstelle nachgeschaltet ist.

Mit zunehmender Automatisierung bei der Fertigung von unterschiedlichsten Produkten wächst der Bedarf, Rohteile oder auch Halbzeuge, aus denen die fertigen Produkte hergestellt werden sollen, oder auch die fertigen Produkte selbst, zum Beispiel für ihre Bearbeitung und/oder Verarbeitung und/oder Verpackung zu vereinzeln und in geordneter Weise bereitzustellen. Hierzu kommen oftmals Greifvorrichtungen der eingangs genannten Art zum Einsatz, die die Bereitstellung der Rohteile, Halbzeuge oder Produkte automatisiert vornehmen.

Insbesondere dort, wo Rohteile, Halbzeuge oder auch fertige Produkte, im Folgenden auch einfach Körper genannt, ungeordnet, zum Beispiel als Schüttgut, bereitgestellt werden, können Schwierigkeiten beim automatisierten Greifen der ungeordnet bereitgestellten Körper auftreten.

Aufgabe der Erfindung ist es daher, eine Greifvorrichtung, eine Vereinzelungsvorrichtung, ein Verfahren zum Greifen von Körpern sowie eine Verwendung einer Greifvorrichtung der eingangs genannten Art bereitzustellen, mit denen Schwierigkeiten beim automatisierten Greifen insbesondere ungeordnet bereitgestellter Körper reduziert oder gar vermieden werden können.

Zur Lösung dieser Aufgabe wird zunächst eine Greifvorrichtung mit den Merkmalen des auf eine solche Greifvorrichtung gerichteten unabhängigen Anspruchs vorgeschlagen. So wird bei einer Greifvorrichtung der eingangs genannten Art zur Lösung der Aufgabe insbesondere vorgeschlagen, dass die Greifvorrichtung zumindest einen dem Greifer zugeordneten Abstreifer mit wenigstens einem Abstreifelement aufweist, wobei das Abstreifelement in einer Abstreifbewegung zwischen einer Ausgangsstellung und einer Endstellung an dem Greifer vorbei bewegbar ist.

Mit einer derartigen Greifvorrichtung ist es möglich, Körper, die mit einem von dem Greifer gegriffenen Körper möglicherweise kollidieren oder im ungeordneten Zustand eventuell sogar auf dem gegriffenen Körper aufliegen, vor Entnahme des gegriffenen Körpers und Übergabe an einen nachgelagerten Bearbeitungsschritt zu entfernen.

Die Greifvorrichtung kann einen Abstreiferantrieb zum Antrieb des wenigstens einen Abstreifelements aufweisen. Mit diesem Abstreiferantrieb kann das wenigstens eine Abstreifelement von seiner Ausgangsstellung in seine Endstellung und wieder zurück bewegt werden, um die zuvor beschriebene Abstreifbewegung durchzuführen. Das wenigstens eine Abstreifelement kann beweglich gelagert an der Greifvorrichtung, insbesondere an dem Greifer, angeordnet sein. Besonders bevorzugt ist die Abstreifbewegung eine Schwenkbewegung. Hierfür kann das wenigstens eine Abstreifelement schwenkbar gelagert sein.

Es ist möglich, jedem Abstreifelement einen eigenen Abstreiferantrieb zuzuordnen. Es sind aber auch möglich, mehrere Abstreifelemente mit einem gemeinsamen Abstreiferantrieb anzutreiben. Ferner ist es möglich, das wenigstens eine Abstreifelement der Greifvorrichtung derart mit dem wenigstens einen Greifer zu koppeln, dass bei Bewegung des Greifers schließlich auch das wenigstens eine Abstreifelement in seiner vorgesehenen Abstreifbewegung bewegt wird. In diesem Zusammenhang kann es vorteilhaft sein, wenn zwischen dem wenigstens einen Abstreifelement und dem wenigstens einen Greifer eine Zwangskopplung und/oder Zwangsführung vorgesehen ist.

Bei einer Ausführungsform ist vorgesehen, dass eine Schwenkachse des wenigstens einen Abstreifelements in oder parallel zu einer Schließrichtung des Greifers ausgerichtet ist. Insbesondere dann, wenn der Greifer längliche Körper, beispielsweise Bürstenkörper oder Zahnbürstenkörper, greifen soll, kann das wenigstens eine Abstreifelement in seiner Abstreifbewegung längs eines gegriffenen länglichen Körpers an diesem vorbeigeführt werden, um möglicherweise störende weitere Körper aus einem Greifbereich des Greifers zu entfernen. Die Abstreifbewegung kann hierbei quer bzw. rechtwinklig zu der Schließrichtung oder Schließbewegung des Greifers ausgerichtet sein.

Das wenigstens eine Abstreifelement der Greifvorrichtung kann beispielsweise aus einem harten, aus einem starren, aus einem flexiblen Material und/oder aus einem Verbund von Materialien bestehen.

Bei einer Ausführungsform der Greifvorrichtung ist vorgesehen, dass der Greifer, insbesondere entgegen einer Zustellrichtung des Greifers zu einem zu greifenden Körper, nachgiebig gelagert an einem Greiferhalter der Greifvorrichtung angeordnet ist. Auf diese Weise können Beschädigungen insbesondere ungeordnet bereitgehaltener Körper beim Greifen eines Körpers vermieden werden. Dadurch dass der Greifer nachgiebig gelagert, beispielsweise federnd gelagert, an dem Greiferhalter der Greifvorrichtung angeordnet ist, kann der Greifer zum Beispiel entgegen seiner Zustellrichtung in seine Greifposition zurückweichen, wenn es zu einer Kollision zwischen dem Greifer und den bereitgehaltenen Körpern und/oder zwischen einem mit dem Greifer gegriffenen Körper und übrigen bereitgehaltenen Körpern kommen sollte. Dies erlaubt ein schonendes Greifen der bereitgehaltenen Körper und hilft Beschädigungen an diesen und gegebenenfalls auch an der Greifvorrichtung zu vermeiden.

Die Greifvorrichtung kann ferner einen Greiferhalter aufweisen, an dem mehrere Greifer angeordnet sind. Jeder der an einem Greiferhalter der Greifvorrichtung angeordneten Greifer kann dabei mit einem eigenen Hub, insbesondere mit einem eigenen vertikalen Hub, vorzugsweise unabhängig von den anderen Greifern bewegt werden.

Bei einer Ausführungsform der Greifvorrichtung ist vorgesehen, dass die Greifvorrichtung, vorzugsweise der Greifer, zumindest einen Positionieranschlag aufweist, der dazu eingerichtet ist, eine Sollposition eines zu greifenden Körpers an dem Greifer zu definieren. Mithilfe des Positionieranschlags kann die Genauigkeit gesteigert werden, mit der der Greifer die Körper greifen kann. Letztendlich vereinfacht dies die automatisierte Handhabung und Vereinzelung insbesondere ungeordnet bereitgehaltener Körper. Zudem können mithilfe des Positionieranschlags auch Beschädigungen beim Greifen von Körpern vermieden werden. Vorzugsweise ist der Positionieranschlag derart ausgebildet, dass ein Körper automatisch in seine Sollposition am Greifer gelangt, wenn dieser den Körper greift.

Bei einer Ausführungsform der Greifvorrichtung ist vorgesehen, dass diese zumindest die Merkmale von zwei der drei unabhängigen Ansprüche, die jeweils auf eine Greifvorrichtung gerichtet sind, miteinander kombiniert. Bei einer Ausführungsform der Greifvorrichtung ist vorgesehen, dass diese sämtliche Merkmale der auf Greifvorrichtungen gerichteten unabhängigen Ansprüche aufweist.

Der Greifer der zuvor beschriebenen Greifvorrichtungen kann ein Zentriermittel, vorzugsweise in Form einer Aussparung und/oder in Form von paarweise korrespondierenden Aussparungen aufweisen. Das Zentriermittel kann an wenigstens einer Greiferbacke des Greifers angeordnet oder ausgebildet sein. Bei einem Zentriermittel, das aus paarweise korrespondierenden Aussparungen besteht, können die korrespondierenden Aussparungen eines Paars an einander zugeordneten Greiferbacken des Greifers angeordnet sein. Das Zentriermittel kann dazu verwendet werden und eingerichtet sein, eine Lage eines Körpers relativ zu Greiferbacken des Greifers zu definieren.

Greiferbacken des Greifers der zuvor beschriebenen Greifvorrichtungen können 3D-gedruckt sein. Auf diese Weise ist es möglich, den Greiferbacken des Greifers auch eine ungewöhnliche und/oder mit konventionellen Fertigungsverfahren nur schwer oder überhaupt nicht herzustellende Form zu verleihen.

Bei einer Ausführungsform der Greifvorrichtung ist vorgesehen, dass wenigstens ein Greifer der Greifvorrichtung und/oder der bereits zuvor erwähnte wenigstens eine Greifer der Greifvorrichtung ein Sauggreifer ist. Mithilfe eines Sauggreifers können auch empfindliche Körper zuverlässig und schonend gegriffen werden. Der Sauggreifer kann zumindest einen Sauger umfassen. Insbesondere längliche Körper, wie zum Beispiel Zahnbürstenkörper, können gut mit einem Sauggreifer gegriffen werden, der wenigstens zwei Sauger umfasst. Bei einer Ausführungsform der zuvor beschriebenen Greifvorrichtungen kann vorgesehen sein, dass die Greifvorrichtung zur nachgiebigen Lagerung des zumindest einen Greifers wenigstens ein Führungselement und wenigstens ein Rückstellelement aufweist. Das wenigstens eine Führungselement und das wenigstens eine Rückstellelement können zwischen dem Greifer und einem, beispielsweise dem bereits zuvor erwähnten Greiferhalter angeordnet sind. Als Rückstellelement kann zum Beispiel ein Federelement, insbesondere eine Feder, vorzugsweise eine Druckfeder, verwendet werden.

Eine Ausführungsform der zuvor beschriebenen Greifvorrichtungen weist einen Überwachungssensor, insbesondere einen Kraftsensor auf. Mithilfe des Überwachungssensors können eine Annäherungsbewegung des wenigstens einen Greifers in seine Greifposition und/oder eine Antriebskraft eines Antriebs des wenigstens einen Greifers überwacht werden. Ein unzulässiger Kraftanstieg beim Annähern des Greifers in seine Greifposition kann aufgrund einer Kollision des Greifers mit einem Hindernis und/oder mit übrigen bereitgehaltenen Körpern auftreten. So ist es möglich, den Greifer anzuhalten, wenn ein derartiger unzulässiger Kraftanstieg detektiert wurde. Auf diese Weise können Beschädigungen der Greifvorrichtung und auch Beschädigungen bereitgehaltener Körper vermieden werden.
Bei einer Ausführungsform der zuvor beschriebenen Greifvorrichtungen ist ferner die Verwendung einer Software zur Überwachung einer Annäherungsbewegung des wenigstens einen Greifers in seine Greifposition und/oder zur Überwachung einer Antriebskraft eines Antriebs des wenigstens einen Greifers vorgesehen. Mithilfe einer derartigen Software können bestimmte Betriebsparameter der Greifvorrichtung, die auf eine Kollision der Greifvorrichtung mit einem Hindernis rückschließen lassen, überwacht und eine entsprechende Gegenmaßnahme ausgelöst werden. So ist es beispielsweise möglich, die zuvor erwähnte Software zusammen mit dem vorerwähnten Überwachungssensor zur Überwachung einer Antriebskraft und/oder eine Leistungsaufnahme eines Antriebs des wenigstens einen Greifers einzusetzen.

Zur automatisierten Ermittlung und/oder Identifikation von Greifpunkten an zu greifenden Körpern kann es zweckmäßig sein, wenn die Greifvorrichtung eine Greifpunktermittlungseinheit aufweist. Die Greifpunktermittlungseinheit kann zumindest eine Kamera umfassen. Die Funktionsweise der Greifpunktermittlungseinheit kann durch eine Körperbeleuchtungseinheit der Greifvorrichtung unterstützt werden.

Die Greifvorrichtung kann ferner eine Steuereinheit aufweisen, die für das Greifen der Körper relevante Prozessparameter berücksichtigt und/oder vorgibt und/oder mit der die Greifvorrichtung automatisiert betrieben werden kann. Die zuvor erwähnte Greifpunktermittlungseinheit der Greifvorrichtung kann mit der Steuereinheit verbunden sein. Auf diese Weise ist es möglich, für das Greifen eines bestimmten Körpers relevante Daten, die von der Greifpunktermittlungseinheit ermittelt wurden, von dieser an die Steuereinheit der Greifvorrichtung zu übertragen. So kann die Steuereinheit den Greifer der Greifvorrichtung unter Berücksichtigung der von der Greifpunktermittlungseinheit identifizierten Greifpunkte gezielt steuern und so seine Bewegungen vorgeben.

Die Greifvorrichtung kann außerdem einen Sensor zur Prüfung der Anwesenheit eines gegriffenen Körpers aufweisen. Mithilfe eines derartigen Sensors kann überprüft werden, ob der Greifer den Körper tatsächlich ordnungsgemäß gegriffen hat. Eine vergleichbare Prüfung kann auch durch Bestimmung einer Länge einer Schließbewegung des Greifers erfolgen. Diese Prüfung kann beispielsweise mithilfe der Steuereinheit der Greifvorrichtung durchgeführt werden.

Bei einer Ausführungsform der Greifvorrichtung ist vorgesehen, dass der Abstreifer zumindest zwei Abstreifelemente aufweist, die an unterschiedlichen Seiten des Greifers angeordnet sind. Die Abstreifelemente können sich in ihrer Ausgangsstellung kreuzen und/oder um voneinander beabstandete, gleich ausgerichtete und/oder parallele Schwenkachsen schwenkbar sein. So können die Abstreifelemente in ihrer Abstreifbewegung, die sie auf ihrem Weg zwischen der Ausgangsstellung und der Endstellung vollziehen, einen möglichst großen Bereich überstreichen und aus diesem störende Körper entfernen.

Bei einer Ausführungsform der Greifvorrichtung ist vorgesehen, dass der Abstreifer zwei Paare voneinander beabstandeter Abstreifelemente umfasst. Diese Abstreifelemente sind beweglich, vorzugsweise schwenkbar, gelagert und erlauben es, auf oder an einem gegriffenen Körper liegende Körper besonders zuverlässig zu entfernen. Die zwei Paare von Abstreifelementen können an unterschiedlichen, vorzugsweise an entgegengesetzten Seiten des Greifers angeordnet sein. Die Abstreifelemente eines Paares können um eine gemeinsame Schwenkachse schwenkbar sein.

Dabei kann ein Abstand zwischen den Abstreifelementen eines Paares größer als eine in Abstandsrichtung messbare Abmessung des Greifers sein. So ist es möglich, dieses Paar von Abstreifelementen in der zuvor beschriebenen Abstreifbewegung an dem Greifer und auch an einem mit dem Greifer gegriffenen Körper vorbeizuführen. Insbesondere dann, wenn ein Abstand eines zweiten Paares von Abstreifelementen des Abstreifers zueinander größer als ein Abstand eines ersten Paars von Abstreifelementen zueinander ist, können sich die zwei Paare von Abstreifelementen in ihrer Ausgangsstellung kreuzen. Auf diese Weise kann jedes Paar von Abstreifelementen bei Durchführung seiner Abstreifbewegung einen maximal möglichen Weg zurücklegen und so in einem besonders großen Bereich möglicherweise störende Körper von dem gegriffenen Körper entfernen.

Hierbei kann es vorteilhaft sein, wenn die Abstreifelemente paarweise um jeweils eine gemeinsame Schwenkachse schwenkbar sind. Auf diese Weise kann verhindert werden, dass die Abstreifelemente eines Paares bei der Durchführung der Abstreifbewegung miteinander kollidieren.

Ein, beispielsweise der zuvor bereits erwähnte, Positionieranschlag kann zwischen Greiferbacken des Greifers und/oder an dem Greifer angeordnet oder ausgebildet sein.

Der Greifer kann Greiferbacken aufweisen, deren Bewegungen zum Beispiel mittels einer Führungskulisse zwangsgeführt sind. Es ist auch möglich, nur eine von zwei einander zugeordneten Greiferbacken des Greifers zu bewegen, während die andere eine stillstehende Greiferbacke ist.

Denkbar ist auch, dass die Greifvorrichtung einen Greifer mit Greiferbacken umfasst, die jeweils durch einen entsprechenden Antrieb motorisch angetrieben sind.

Bei einer Ausführungsform der zuvor beschriebenen Greifvorrichtungen, kann die Greifvorrichtung ferner wenigstens einen Roboterarm aufweisen, an dem der Greifer angeordnet ist. Auf diese Weise wird eine Greifvorrichtung bereitgestellt, die besonders flexibel ist und vergleichsweise einfach an unterschiedlichste Greifaufgaben angepasst werden kann. Die Bewegungen des Roboterarms können beispielsweise mithilfe der zuvor erwähnten Steuereinheit der Greifvorrichtung gesteuert werden. Dabei kann die Steuereinheit auch die Informationen, die beispielsweise mit Hilfe der Greifpunktermittlungseinheit zusammengetragen werden, berücksichtigen.

Die zuvor erwähnten Greifvorrichtungen können jeweils eine Schnellwechselvorrichtung für den wenigstens einen Greifer und/oder jeweils eine Schnellwechselvorrichtung für das wenigstens eine Abstreifelement aufweisen. Mithilfe der Schnellwechselvorrichtungen können der wenigstens eine Greifer und/oder das wenigstens eine Abstreifelement bei Bedarf auch ohne den Einsatz von Werkzeug ausgewechselt werden.

Zur Lösung der Aufgabe wird auch eine Vereinzelungsvorrichtung mit den Merkmalen des unabhängigen, auf eine derartige Vereinzelungsvorrichtung gerichteten Anspruchs vorgeschlagen, die zumindest eine Greifvorrichtung nach einem der auf die Greifvorrichtung gerichteten Ansprüche aufweist.

Durch die zumindest eine Greifvorrichtung ist die Vereinzelungsvorrichtung besonders flexibel und variabel einsetzbar. So ist es möglich, mit der Vereinzelungsvorrichtung Körper unterschiedlicher Form, Farbe und Geometrie zu vereinzeln, ohne dass aufwändige Anpassungen oder konstruktive Veränderungen der Vereinzelungsvorrichtung notwendig wären.

Für die Zuführung der zu vereinzelnden und/oder zu greifenden Körper kann die Vereinzelungsvorrichtung eine Körperzuführvorrichtung aufweisen. Die Vereinzelungsvorrichtung kann auch eine Ablagefläche für die zu vereinzelnden und/oder zu greifenden Körper umfassen. Vorzugsweise mündet die Körperzuführvorrichtung zumindest mittelbar auf oder in die Ablagefläche, so dass die zugeführten Körper zwangsweise auf die Ablagefläche gelangen.

Die Vereinzelungsvorrichtung kann zudem eine Rüttelvorrichtung aufweisen. Diese ist vorzugsweise der zuvor beschriebenen Ablagefläche zugeordnet. Mithilfe der Rüttelvorrichtung kann bereits eine erste Vereinzelung, die auch Vorvereinzelung genannt werden kann, der oftmals in Form von Schüttgut auf die Ablagefläche aufgebrachten Körper erfolgen. Die Rüttelvorrichtung kann beispielsweise ein Rüttelband umfassen. Das Rüttelband kann zumindest einen Teil der zuvor erwähnten Ablagefläche der Vereinzelungsvorrichtung bilden. Mithilfe des Rüttelbands können eine darauf abgelegte Menge von Körpern durch eine Rüttelbewegung des Rüttelbandes aufgelockert und dadurch die in der Menge enthaltenen Körper vereinzelt werden.

Das Rüttelband kann mit Noppen versehen sein. Mithilfe der Noppen kann eine Bewegung des Rüttelbands zuverlässig auf darauf abgelegte Körper übertragen werden. Das Rüttelband und/oder die zuvor erwähnte Ablagefläche können ferner eine Farbe haben, die auf eine Farbe von darauf abgelegten Körpern abgestimmt ist. In diesem Zusammenhang kann es zweckmäßig sein, wenn die Farbe des Rüttelbandes und/oder der Ablagefläche einen möglichst großen Kontrast zu einer Farbe der darauf abgelegten Körper aufweist. Dies kann eine optische/visuelle Erkennung der Körper auf dem Rüttelband und insbesondere eine automatisierte Identifikation oder Ermittlung von Greifpunkten begünstigen.
Um die optische/visuelle Erkennung von Körpern auf dem Rüttelband und/oder eine automatisierte Identifikation oder Ermittlung von Greifpunkten zu begünstigen, kann es auch zweckmäßig sein, wenn das Rüttelband und/oder die Ablagefläche durchsichtig und/oder lichtdurchlässig ist/sind. So können die darauf abgelegten Körper von unten beleuchtet werden.

Zumindest ein Teil der zuvor erwähnten Ablagefläche kann an einem Rütteltisch ausgebildet sein. Dieser Rütteltisch kann Teil der zuvor erwähnten Rüttelvorrichtung der Vereinzelungsvorrichtung sein und dazu verwendet werden, die darauf abgelegten Körper bei Bedarf stärker zu vereinzeln und voneinander zu trennen.

Bei einer Ausführungsform der zuvor erwähnten Vereinzelungsvorrichtung kann eine Körperbeleuchtungseinheit, insbesondere die zuvor erwähnte Körperbeleuchtungseinheit der Greifvorrichtung, unterhalb der Ablagefläche angeordnet sein. Bei einer anderen Ausführungsform der zuvor erwähnten Vereinzelungsvorrichtung kann eine Körperbeleuchtungseinheit, insbesondere die zuvor erwähnte Körperbeleuchtungseinheit der Greifvorrichtung, oberhalb der Ablagefläche angeordnet sein.

Bei einer weiteren Ausführungsform der zuvor erwähnten Vereinzelungsvorrichtung ist eine Körperbeleuchtungseinheit oberhalb und eine Körperbeleuchtungseinheit unterhalb der Ablagefläche angeordnet.

Mithilfe der zuvor erwähnten Körperbeleuchtungseinheiten können die Ablagefläche und vor allem darauf befindliche Körper hell erleuchtet werden. Dies begünstigt eine zuverlässige, insbesondere optische, Identifikation von Greifpunkten, die mit der Greifvorrichtung zum Greifen der bereitgehaltenen Körper angefahren werden.

Nur am Rande sei erwähnt, dass je nach Farbe und/oder Muster der zu vereinzelnden und zu greifenden Körper hierbei Licht unterschiedlicher Wellenlängen von der Körperbeleuchtungseinheit bzw. den Körperbeleuchtungseinheiten abgegeben werden kann. Dies mit dem Ziel, die Identifikation zugänglicher Greifpunkten mithilfe der Greifpunktermittlungseinheit zu vereinfachen. So ist es möglich, Licht mit einer solchen Wellenlänge oder Farbe auf die Ablagefläche abzugeben, das einen größtmöglichen Kontrast in einem von der Greifpunktermittlungseinheit zur Identifikation von zugänglichen Greifpunkten auszuwertenden Bild bewirkt.

Die Vereinzelungsvorrichtung kann zudem eine der Greifvorrichtung nachgelagerte Ablagestation mit definierten Körperablageplätzen aufweisen. Diese Körperablagestation kann ein Ablageband umfassen, an dem die Körperablageplätze angeordnet sind. Mithilfe des Ablagebandes können die Körperablageplätze und darauf angeordnete Körper nachgelagerten Bearbeitungsschritten zugeführt werden.

Ferner ist es möglich, dass die Vereinzelungsvorrichtung, eine Handhabungseinheit zum Weitertransport der vereinzelten Körper umfasst. Diese Handhabungseinheit kann vorzugsweise der zuvor erwähnten Ablagestation zugeordnet sein. Die Handhabungseinheit kann dazu verwendet werden, innerhalb der Ablagestation befindliche, bereits vereinzelte Körper einer nachgelagerten Bearbeitungsstation zuzuführen. Die Handhabungseinheit kann zu diesem Zweck wenigstens einen Übergabegreifer aufweisen.

Zur Lösung der zuvor erwähnten Aufgabe wird auch ein Verfahren der eingangs genannten Art zum Greifen bereitgestellter Körper vorgeschlagen, das die Mittel und Merkmale des unabhängigen, auf ein solches Verfahren gerichteten Anspruchs aufweist. Zur Lösung der zuvor erwähnten Aufgabe wird bei dem eingangs genannten Verfahren somit insbesondere vorgeschlagen, dass ein für einen Greifer der Greifvorrichtung zugänglicher Greifpunkt eines Körpers identifiziert wird, wonach der Greifer den Körper an dem identifizierten Greifpunkt greift, wonach zumindest ein Abstreifelement eines dem Greifer zugeordneten Abstreifers in einer Abstreifbewegung zwischen einer Ausgangsstellung und einer Endstellung an dem Greifer vorbeibewegt wird, um an dem gegriffenen Körper anliegende und/oder auf dem gegriffenen Körper aufliegende und/oder mit diesen kollidierende Körper von dem Greifer und/oder von dem gegriffenen Körper zu entfernen.

Mithilfe des Verfahrens, bei dem die zuvor erwähnte Vereinzelungsvorrichtung und/oder die zuvor erwähnten Greifvorrichtungen verwendet werden können, können insbesondere ungeordnet bereitgestellte Körper einfacher gegriffen und letztendlich einfacher vereinzelt werden.

Die zu greifenden Körper können längliche Körper sein. Diese können ein Längen-Breitenverhältnis von zumindest 3 zu 1 aufweisen. Insbesondere ist das Verfahren für die Handhabung, das Greifen und/oder die Vereinzelung von Bürstenkörpern, insbesondere von Zahnbürstenkörpern geeignet.

Die zu greifenden Körper können vorzugsweise als Schüttgut bereitgestellt werden. Hierbei bilden die zu greifenden Körper in der Regel zunächst ungeordnete Haufen. Innerhalb der Haufen können solche Körper identifiziert werden, deren Greifpunkte für den Greifer zugänglich sind. Sobald ein zugänglicher Greifpunkt identifiziert wurde, kann der Greifer den Körper an diesem Greifpunkt greifen. Körper, die eine freie Entnahme des gegriffenen Körpers aus dem Haufen beeinträchtigen könnten, werden dann mithilfe des Abstreifers aus dem Entnahmebereich oder Greifbereich entfernt. Dies kann insbesondere mithilfe des zumindest einen Abstreifelement des Abstreifers geschehen. So können vor allem auf dem gegriffenen Körper aufliegende Körper mithilfe des Abstreifers zuverlässig entfernt werden.

Der zuvor erwähnte Greifpunkt kann vorzugsweise optisch identifiziert oder ermittelt werden. Dies kann mithilfe einer Kamera und vorzugsweise mithilfe einer Greifpunktermittlungseinheit, wie sie zuvor beschrieben wurde, geschehen.

Dabei können die zu greifenden Körper, insbesondere wenn sie als Schüttgut in einem Haufen vorliegen, zunächst vereinzelt werden, insbesondere dann, wenn kein frei zugänglicher Greifpunkt identifiziert werden kann. Nach einer Vereinzelung, die beispielsweise mit der zuvor erwähnten Rüttelvorrichtung vorgenommen werden kann, kann erneut versucht werden, einen zugänglichen Greifpunkt zu identifizieren. Gegebenenfalls wird diese Vorgehensweise so lange wiederholt, bis zumindest ein zugänglicher Greifpunkt identifiziert werden kann.

Um Fehlgriffe zu vermeiden, kann geprüft werden, ob ein Körper mit dem Greifer tatsächlich gegriffen wurde. Dies kann insbesondere mithilfe eines Sensors der Greifvorrichtung und/oder durch Bestimmung einer Länge einer Schließbewegung des Greifers geschehen.

Zur Lösung der Aufgabe wird auch die Verwendung einer Greifvorrichtung nach einem der auf die Greifvorrichtung gerichteten Ansprüche zum Greifen länglicher Körper, insbesondere zum Greifen von Bürstenkörpern und/oder Zahnbürstenkörpern vorgeschlagen. Die Greifvorrichtung kann dabei auch zum Vereinzeln derartiger länglicher Körper, insbesondere zum Vereinzeln von Bürstenkörpern und/oder Zahnbürstenkörpern verwendet werden.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen in zum Teil stark schematisierter Darstellung:
- Figur 1:: Eine perspektivische Ansicht einer Vereinzelungsvorrichtung für Zahnbürstenkörper, die eine Greifvorrichtung mit einem Greifer umfasst,
- Figur 2:: eine Detailansicht des Greifers der in Figur 1 gezeigten Greifvorrichtung, wobei zu erkennen ist, dass der Greifer zwischen seinen Greiferbacken einen Zahnbürstenkörper gegriffen hält,
- Figur 3:: eine perspektivische Ansicht der in Figur 1 gezeigten Vereinzelungsvorrichtung, wobei hier Abstreifelemente eines Abstreifers, der dem Greifer der Greifvorrichtung zugeordnet ist, aus ihrer in den Figuren 1 und 2 gezeigten Ausgangsstellung in eine Zwischenposition angeordnet sind, die sie bei Durchführung ihrer Abstreifbewegung auf dem Weg in die in den Figuren 5 und 6 gezeigten Endstellung zwischenzeitlich erreichen.
- Figur 4:: der in Figur 3 gezeigte Greifer in vergrößerter Darstellung,
- Figur 5:: eine perspektivische Ansicht der in den Figuren 1 und 3 gezeigten Vereinzelungsvorrichtung, wobei hier die Abstreifelemente des Abstreifers in ihrer Endstellung angelangt sind,
- Figur 6:: eine vergrößerte Ansicht des in Figur 5 gezeigten Greifers,
- Figur 7:: eine perspektivische Ansicht einer weiteren Ausführungsform einer Vereinzelungsvorrichtung mit einer Greifvorrichtung, die einen Sauggreifer als Greifer aufweist, sowie
- Figur 8:: eine vergrößerte Ansicht des in Figur 7 gezeigten Greifers.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

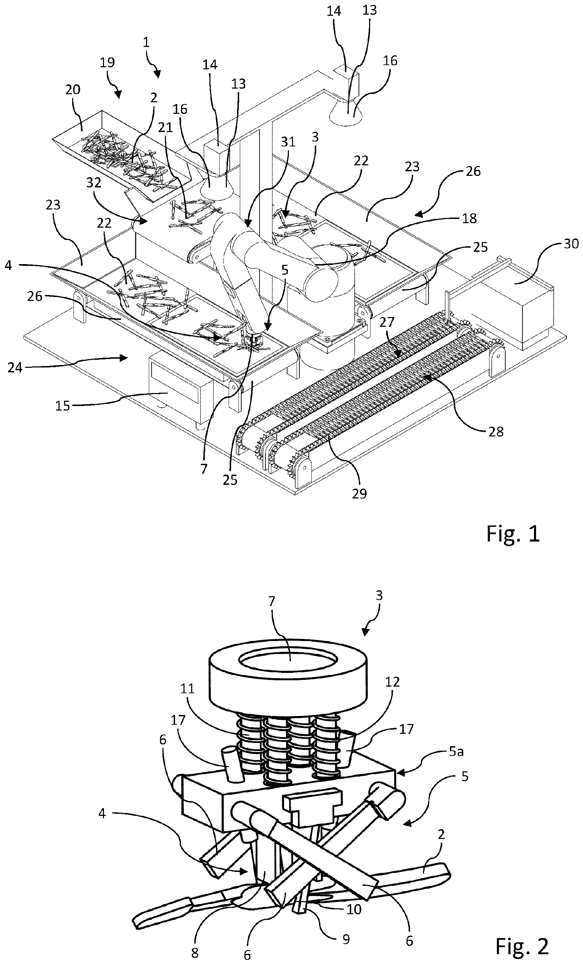

Die Figuren 1, 3, 5 und 7 zeigen unterschiedliche Ausführungsformen jeweils einer im Ganzen mit 1 bezeichneten Vereinzelungsvorrichtung. Ohne konkrete Bezugnahme auf eine spezielle Ausführungsform kann die nachfolgende Beschreibung auf sämtliche in den Figuren gezeigten Ausführungsformen gelesen werden.
Die Figuren 1, 3 und 5 zeigen eine Vereinzelungsvorrichtung 1 in unterschiedlichen Zuständen. Die Vereinzelungsvorrichtung 1 dient dazu, der Vereinzelungsvorrichtung 1 ungeordnet zugeführte Körper 2, hier Zahnbürstenkörper 2, zu vereinzeln. Hierzu weist die Vereinzelungsvorrichtung 1 unter anderem eine Greifvorrichtung 3 auf. Mithilfe der Greifvorrichtung 3 können die noch ungeordnet liegenden Zahnbürstenkörper 2 einzeln ergriffen und so schließlich vereinzelt abgelegt werden.

Die Greifvorrichtung 3 weist einen Greifer 4 auf. Dieser dient dazu, die bereitgestellten Zahnbürstenkörper 2 zu greifen.

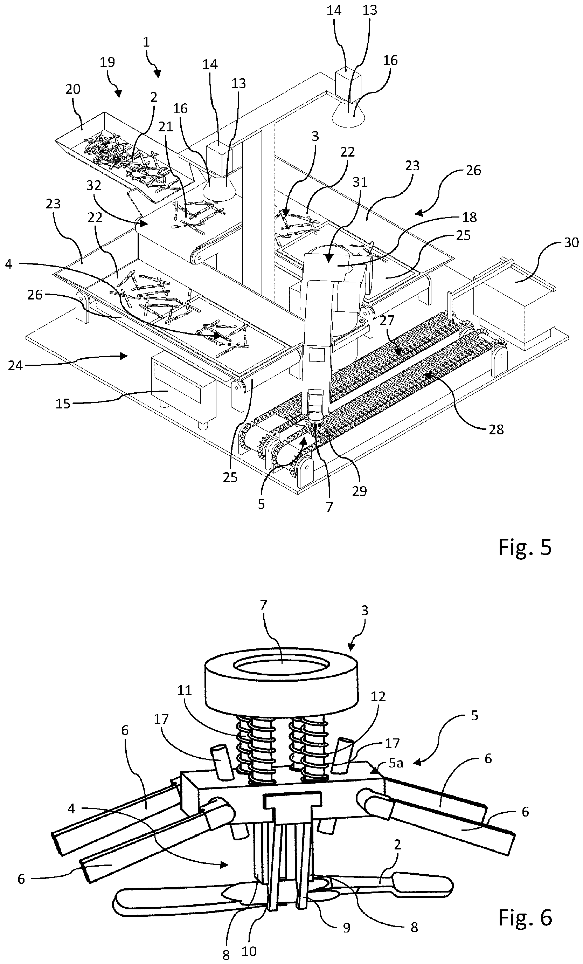

Die Greifvorrichtung 3 umfasst einen dem Greifer 4 zugeordneten Abstreifer 5. Der Abstreifer 5 weist insgesamt vier Abstreifelemente 6 auf, die gemäß den Figuren fingerförmig ausgebildet sind. Die Abstreifelemente 6 werden in einer Abstreifbewegung zwischen einer Ausgangsstellung (vergleiche Figuren 1 und 2) und einer Endstellung (vergleiche Figuren 5 und 6) an dem Greifer 4 in einer Abstreifbewegung vorbeibewegt. Durch die Abstreifbewegung, die insbesondere durch einen Vergleich der Figuren 2, 4 und 6 deutlich wird, können Bürstenkörper 2, die benachbart zu einem mit dem Greifer 4 gegriffenen Bürstenkörper 2 liegen, von dem gegriffenen Bürstenkörper 2 und aus einem Greifbereich des Greifers 4 entfernt werden. Die Abstreifelement 6 anzutreiben, weist die Greifvorrichtung 3 einen Abstreiferantrieb 5a auf.

Die Figuren 2, 4 und 6 zeigen ferner, dass der Greifer 4 entgegen einer Zustellrichtung des Greifers 4, in der er in Richtung einer Ablagefläche 22, auf der die zu greifenden Körper 2 angeordnet sind, bewegt wird, nachgiebig an einem Greiferhalter 7 der Greifvorrichtung 3 angeordnet ist. Durch die nachgiebige Lagerung des Greifers 4 an dem Greiferhalter 7 können Beschädigungen der zum Greifen bereitgehaltenen Körper 2 einerseits und zudem Beschädigungen des Greifers 4 vermieden werden. Im Falle einer Kollision kann der nachgiebig gelagerte Greifer 4 entgegen der Zustellrichtung des Greifers 4 zurückweichen, was letztendlich ein schonendes Greifen bereitgehaltener Körper 2, insbesondere Zahnbürstenkörper 2, begünstigt.

Die Abstreifelemente 6 sind schwenkbar beweglich an dem Greifer 4 gelagert. Dabei sind jeweils zwei der vier Abstreifelement 6 um eine gemeinsame Schwenkachse schwenkbar an dem Greifer 4 gelagert angeordnet. Die Schwenkachsen der Abstreifelemente 6 sind dabei beabstandet und parallel zueinander angeordnet und parallel zu einer Schließrichtung des Greifers 4 ausgerichtet. Die Abstreifbewegung, die von den Abstreifelementen 6 durchgeführt wird, ist demnach quer oder rechtwinklig zu der Schließrichtung oder Schließbewegung des Greifers 4 ausgerichtet.

Der in den Figuren 1 bis 6 gezeigte Greifer 4 der Greifvorrichtung 3 weist außerdem zwei Positionieranschläge 8 auf. Die Positionieranschläge 8 des Greifers 4 sind dazu eingerichtet, eine Sollposition eines zu greifenden Körpers 2 an dem Greifer 4 vorzugeben.

Der Greifer 4 umfasst mehrere Greiferbacken 9, an denen Zentriermittel 10 in Form von paarweise korrespondierenden Aussparungen 10 vorgesehen sind. Die Zentriermittel 10, also die Paare korrespondierender Aussparungen 10, definieren eine Lage eines gegriffenen Zahnbürstenkörpers 2 relativ zu den beiden Greiferbacken 9 des Greifers 4. Die Greiferbacken 9 des Greifers 4 können 3D-gedruckt sein.

Zur nachgiebigen Lagerung des Greifers 4 weist die Greifvorrichtung 3 insgesamt vier Führungselemente 11 mit jeweils einem Rückstellelement 12 auf, die zwischen dem Greifer 4 und dem Greiferhalter 7 angeordnet sind. Als Rückstellelemente 12 werden Druckfedern verwendet.

Die Greifvorrichtung 3 umfasst zudem eine Körperbeleuchtungseinheit 13, die zusammen mit einer Greifpunktermittlungseinheit 14 und einer Steuereinheit 15 zur Greifpunktermittlung beziehungsweise Identifikation für den Greifer 4 zugänglicher Greifpunkte eingesetzt werden. Die Körperbeleuchtungseinheit 13 dient dazu, eine Ablagefläche 22, auf der die Zahnbürstenkörper 2 abgelegt werden, so hell zu erleuchten, dass eine Identifikation zugänglicher Greifpunkte mithilfe von Kameras 16 der Greifpunktermittlungseinheit 14 zuverlässig möglich ist. Der Greifer 4 ist zudem mit zwei Sensoren 17 ausgestattet, die zur Prüfung der Anwesenheit eines gegriffenen Körpers 2 zwischen den Greiferbacken 9 des Greifers 4 eingerichtet sind.

Die Abstreifelemente 6 des Abstreifers 5 sind an unterschiedlichen Seiten des Greifers 4 angeordnet. In ihrer Ausgangsstellung gemäß Figur 2 kreuzen sich die Abstreifelemente 6 des Abstreifers 5 paarweise. Die insgesamt vier Abstreifelemente 6 des in den Figuren gezeigten Greifers 4 sind paarweise beabstandet zueinander angeordnet, wobei die so gebildeten beiden Paare von Abstreifelementen 6 paarweise um die bereits zuvor erwähnte gemeinsame Schwenkachse beweglich an dem Greiferhalter 7 angeordnet sind. So können die Abstreifelemente 6 eines Paares gemeinsam um dieselbe Schwenkachse aus ihrer Ausgangsstellung in ihre Endstellung geschwenkt werden. Hierbei erfolgt die Bewegung von innen nach außen. Die Schwenkachsen der Abstreifelemente 6 sind, wie bereits zuvor erwähnt, parallel und beabstandet zueinander.

Ein Abstand zwischen den Abstreifelementen 6 jedes Paares ist dabei größer als eine in Abstandsrichtung messbare Abmessung des Greifers 4. Auf diese Weise ist es möglich, die Abstreifelemente 6 an dem Greifer 4 vorbei zu schwenken.

Befinden sich die Abstreifelemente 6 in ihrer in Figur 2 gezeigten Ausgangsstellung sind sie vollständig zwischen einer durch ein freies Ende verlaufenden Querschnittsebene des Greifers 4 und dem Greiferhalter 7 angeordnet. Gleiches trifft zu, wenn die Abstreifelemente 6 in ihrer in Figur 6 gezeigten Endstellung angelangt sind. So wird sichergestellt, dass die Abstreifelemente 6 in der Ausgangsstellung und in der Endstellung nicht im Wege sind und eine Aufnahme beziehungsweise eine Ablage der gegriffenen Körper 2 nicht beeinträchtigen.

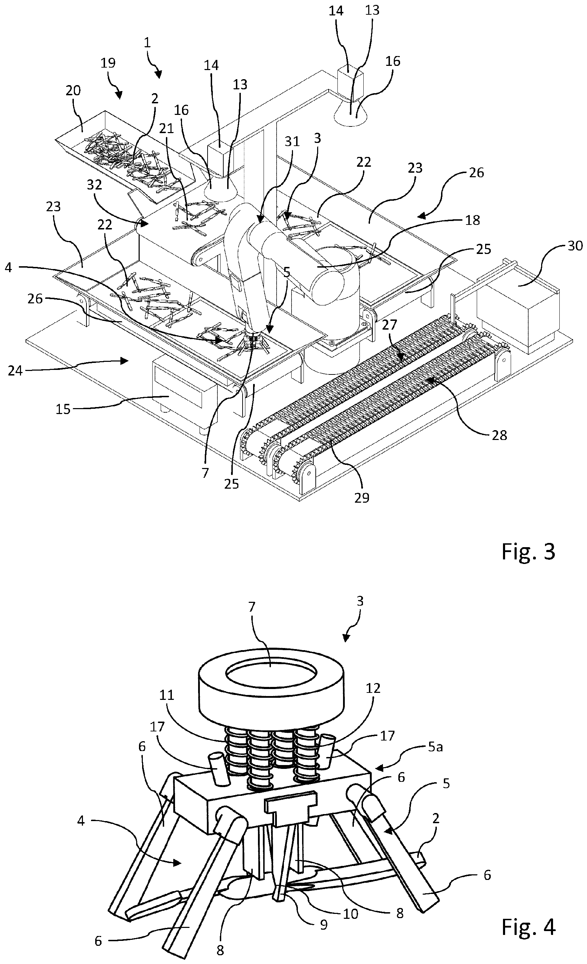

In einer Zwischenstellung, die beispielsweise in Figur 4 gezeigt ist, sind die Abstreifelemente 6 so angeordnet, dass ihre distalen Enden die zuvor erwähnte, gedachte Querschnittsebene durchragen. Mit anderen Worten bedeutet dies, dass die Abstreifelemente 6 in dieser Zwischenstellung über das freie Ende des Greifers 4 hervorstehen.

Die zuvor erwähnten Positionieranschläge 8 des Greifers 4 sind zwischen den Greiferbacken 9 des Greifers 4 und zudem an dem Greifer 4 selbst angeordnet beziehungsweise ausgebildet. Die Greifvorrichtung 3 weist außerdem einen Roboterarm 18 auf. An diesem Roboterarm 18 ist der Greifer 4 angeordnet.

Die Vereinzelungsvorrichtung 1 weist außerdem eine Körperzuführvorrichtung 19 auf. Die Körperzuführvorrichtung 19 umfasst eine Schütte 20 sowie ein der Schütte 20 nachgelagertes Verteilband 21. Beidseits des Verteilbands 21 sind Ablageflächen 22 angeordnet, auf denen über die Körperzuführvorrichtung 19 der Vereinzelungsvorrichtung 1 zugeführte Körper 2, hier Zahnbürstenkörper 2, zunächst ungeordnet zu liegen kommen. Die dort ungeordnet aufliegenden Körper 2 werden schließlich mithilfe der zuvor ausführlich beschriebenen Greifvorrichtung 3 gegriffen, dadurch vereinzelt und weiter transportiert. Dem Verteilband 21 ist ein Körpersensor 32 zugeordnet, mit dem eine Anzahl von Bürstenkörpern 2 auf dem Verteilband 21 bestimmt werden kann. So ist es möglich, die Zufuhr von Bürstenkörpern 2 über die Schütte 20 zu stoppen, wenn eine ausreichende Anzahl von Bürstenkörpern 2 auf dem Verteilband 21 angeordnet ist. Als Körpersensor 32 kommt bei den gezeigten Vereinzelungsvorrichtungen 1 jeweils eine Waage zum Einsatz. Grundsätzlich ist es auch möglich, die Anzahl der Körper 2 auf dem Verteilband 21 mittels einer Kamera optisch zu bestimmen.

Die zuvor erwähnten Ablageflächen 22 sind an Wannen 23 der Vereinzelungsvorrichtung 1 ausgebildet. Die Vereinzelungsvorrichtung 1 umfasst ferner eine Rüttelvorrichtung 24. Die Rüttelvorrichtung 24 dient dazu, auf den Ablageflächen 22 der Wannen 23 aufliegende Körper 2 zumindest grob voneinander zu trennen, um die Identifikation von zugänglichen Greifpunkten zu erlauben. Die Rüttelvorrichtung 24 weist dazu zwei Rüttelbänder 25 auf, die einen Teil der Ablageflächen 22 innerhalb der Wannen 23 bilden. Mithilfe der Rüttelbänder 25 kann die Lage der auf den Rüttelbändern 25 aufliegenden Körper 2 durch eine entsprechende Bewegung verändert werden.

Die Rüttelvorrichtung 24 umfasst außerdem zwei Rütteltische 26, auf denen die zuvor erwähnten Wannen 23 angeordnet sind. Durch Aktivierung der Rütteltische 26 können die Wannen in Bewegung oder Vibration versetzt werden, um die Lage darin angeordneter Körper 2 bei Bedarf zu verändern. Auch der Einsatz der Rütteltische 26 dient letztendlich dazu, die Lage der Körper 2 so zu verändern, dass zumindest bei einem Körper 2 ein zugänglicher Greifpunkt für den Greifer 4 der Greifvorrichtung 3 identifiziert werden kann.

Bei der in den Figuren gezeigten Vereinzelungsvorrichtung 1 ist die bereits zuvor erwähnte Körperbeleuchtungseinheit 13 der Greifvorrichtung 3 ebenso wie die beiden Kameras 16 oberhalb der Ablageflächen 22 und der Wannen 23 der Vereinzelungsvorrichtung 1 angeordnet. Die Körperbeleuchtungseinheit 13 ist in den Figuren nur stark schematisiert dargestellt und kann beispielsweise in die Kameras 16 integriert sein.

Der Greifvorrichtung 3 nachgelagert weist die Vereinzelungsvorrichtung 1 eine Ablagestation 27 auf. An der Ablagestation 27 sind definierte Körperablageplätze 28 ausgebildet. Die Körperablageplätze 28 sind auf einem Ablageband 29 der Ablagestation 27 angeordnet. Mithilfe des Ablagebandes 29 können die Körperablageplätze 28 und darauf angeordnete, vereinzelte Körper 2 einer der Ablagestation 27 zugeordneten Handhabungseinheit 30 der Vereinzelungsvorrichtung 1 zugeführt werden. Mithilfe der Handhabungseinheit 30 können die vereinzelten Körper 2 von den Körperablageplätzen 28 an dem Ablageband 29 der Ablagestation 27 abgenommen und weiteren, in den Figuren nicht näher dargestellten Bearbeitungsstationen zugeführt werden, die bei dem gezeigten Anwendungsfall Bürstenbearbeitungsstationen sind.

Mit der zuvor beschriebenen Vereinzelungsvorrichtung 1 und der zuvor beschriebenen Greifvorrichtung 3 kann das nachfolgend beschriebene Verfahren zum Greifen bereitgestellter Körper 2 durchgeführt werden.

Hierbei wird zunächst ein für den Greifer 4 zugänglicher Greifpunkt eines Körpers 2 identifiziert. Anschließend greift der Greifer 4 den Körper 2 an dem identifizierten Greifpunkt. Anschließend werden der dem Greifer 4 zugeordnete Abstreifer 5 aktiviert und die Abstreifelemente 6 in der Abstreifbewegung zwischen der Ausgangsstellung und der Endstellung an dem Greifer 4 vorbeibewegt. Dies mit dem Ziel an dem gegriffenen Körper 2 anliegende und/oder auf dem gegriffenen Körper 2 aufliegende und/oder mit diesem kollidierenden Körper 2 von dem Greifer 4 und damit letztendlich auch von dem gegriffenen Körper 2 zu entfernen.

Wie in den Figuren dargestellt, sind die Körper 2 hierbei längliche Körper, nämlich Zahnbürstenkörper 2. Die zu greifenden Körper 2 werden in Form von Schüttgut bereitgestellt.

Mithilfe der zuvor erwähnten Kameras 16 wird der zugängliche Greifpunkt optisch identifiziert. Insbesondere dann, wenn kein zugänglicher, also freier Greifpunkt identifiziert werden kann, werden die zu greifenden Körper 2 auf der Ablagefläche 22 aufgelockert beziehungsweise vereinzelt. Dies geschieht mithilfe der zuvor erwähnten Rüttelvorrichtung 24 der Vereinzelungsvorrichtung 1.

Bei Bedarf kann geprüft werden, ob ein Körper 2 mit dem Greifer 4 der Greifvorrichtung 3 gegriffen wurde. Hierzu können die dafür vorgesehenen Sensoren 17 der Greifvorrichtung 3 verwendet werden. Bei Bedarf kann auch über die Bestimmung einer Länge einer Schließbewegung des Greifers 4 darauf zurückgeschlossen werden, ob tatsächlich ein Körper 2 gegriffen wurde oder nicht.

Mithilfe eines Überwachungssensors 31, der in den gezeigten Ausführungsbeispielen der Greifvorrichtung 3 ein Kraftsensor 31 ist, kann eine Annäherungsbewegung der Greifer 4 in seine Greifposition überwacht werden. Dies geschieht mittels einer Überwachung einer Antriebskraft eines Antriebs des entsprechenden Greifers 4. Wird der Greifer 4 in seine Greifposition abgesenkt und wird mithilfe des Kraftsensors 31 dabei ein unzulässiger Kraftanstieg am Antrieb des Greifers 4 detektiert, kann der Antrieb deaktiviert und der Greifer 4 angehalten werden, um Beschädigungen des Greifers 4 und/oder zu greifender Körper 2 zu vermeiden. Es ist auch möglich, die Greiferbewegung mithilfe einer Software und/oder mithilfe der zuvor bereits erwähnten Steuereinheit 15 zu überwachen. So ist es möglich, beispielsweise eine Leistungsaufnahme eines Antriebs, mit dem der Greifer 4 in seine Greifposition bewegt wird, zu überwachen. Wird ein unzulässiger Anstieg der Leistungsaufnahme detektiert, kann dies wiederum auf eine Kollision oder ein Hindernis im Weg des Greifers 4 zurückzuführen sein. Auch in diesem Fall kann der Greifer 4 aus Sicherheitsgründen angehalten werden.

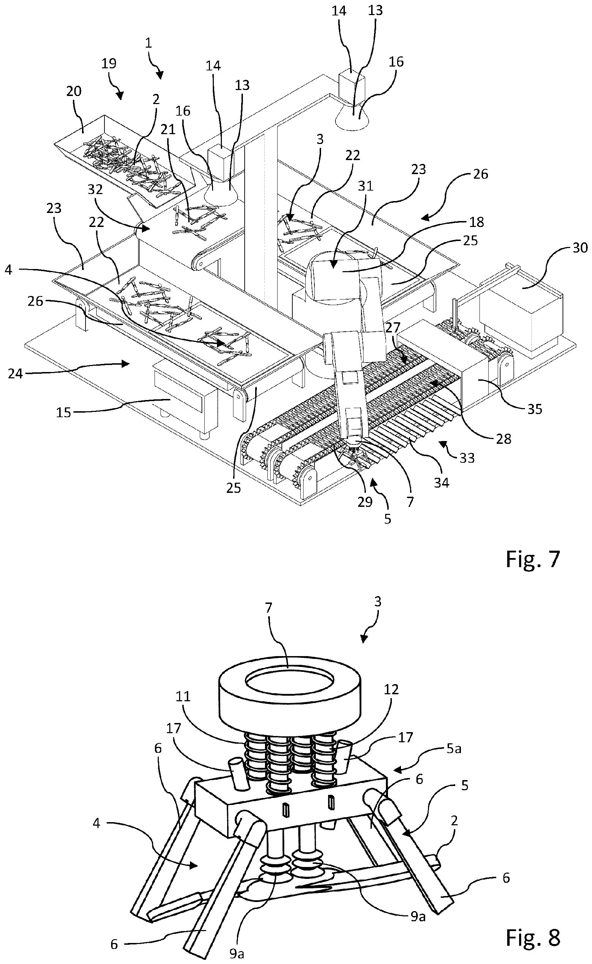

Die Figuren 7 und 8 zeigen eine leicht abgewandelte Ausführungsform der in den übrigen Figuren dargestellten Vereinzelungsvorrichtung 1. Der Greifer 4 der Greifvorrichtung 3 dieser Vereinzelungsvorrichtung 1 ist als Sauggreifer ausgebildet. Figur 8 verdeutlich, dass der Sauggreifer 4 anstelle von Greiferbacken zwei Sauger 9a aufweist, mit denen Körper 2, hier ein Zahnbürstenkörper 2, mittels Unterdrucks angesaugt und so gegriffen werden können.

Die in Figur 6 gezeigte Vereinzelungsvorrichtung weist außerdem eine Puffervorrichtung 33 auf. In der Puffervorrichtung 33 sind Ablagen 34 für Körper 2 vorgesehen. Die Ablagen 34 sind V-förmig ausgebildet. Die V-förmigen Ablagen 34 dienen einer Zentrierung und/oder ordnungsgemäßen Ausrichtung von Körpern 2. Die Ablagen 34 der Puffervorrichtung 33 können mithilfe der Greifvorrichtung 3 befüllt werden.

Mithilfe einer Umlegevorrichtung 35 können die auf den Ablagen 34 der Puffervorrichtung 33 ordnungsgemäß ausgerichteten Körper 2 anschließend auf die Körperablageplätze 28 des Ablagebandes 2 der Ablagestation 27 abgelegt werden.

Mithilfe der Umlegevorrichtung 35 können auf den Körperablageplätzen 28 des Ablagebandes 29 der Ablagestation 27 befindliche Körper 2 der Puffervorrichtung 33 zugeführt werden, um eine falsche Ausrichtung von Körpern 2 mithilfe der V-förmigen Ablagen 34 der Puffervorrichtung 33 zu korrigieren. Mithilfe der Umlegevorrichtung 35 können die Körper 2 anschließend wieder der Ablagestation 27 zugeführt werden.

Ferner ist es möglich, unbelegte Körperablageplätze 28 des Ablagebandes 29 mit Körpern 2 aus der Puffervorrichtung 33 aufzufüllen. Hierfür können die Körper 2 mithilfe der Umlegevorrichtung 35 der Puffervorrichtung 33 entnommen und den Körperablageplätzen 28 zugeführt werden. Wie bereits zuvor erläutert wurde, können die ausführlich beschriebenen Greifvorrichtungen 3 insbesondere zum Greifen länglicher Körper 2, nämlich beispielsweise zum Greifen von Zahnbürstenkörpern 2 eingesetzt werden.

Die Erfindung befasst sich mit Verbesserungen auf dem technischen Gebiet der Handhabung von Rohteilen, Halbzeugen oder auch von fertigen Produkten in vorzugsweise automatisierten Fertigungsprozessen. Hierzu wird unter anderem die Greifvorrichtung 3 vorgeschlagen, die den Greifer 4 aufweist. Dem Greifer 4 ist der Abstreifer 5 der Greifvorrichtung 3 zugeordnet, der wenigstens ein Abstreifelement 6 aufweist. Das Abstreifelement 6 kann bei Bedarf in einer Abstreifbewegung zwischen einer Ausgangsstellung und eine Endstellung an dem Greifer 4 vorbeibewegt werden, um den Greifprozess möglicherweise störende Körper 2 aus einem Greifbereich des Greifers 4 zu entfernen. Dies geschieht insbesondere dann, wenn der Greifer 4 bereits einen Körper 2 gegriffen hat.

### Bezugszeichenliste

- 1: Vereinzelungsvorrichtung
- 2: Körper, Zahnbürstenkörper
- 3: Greifvorrichtung
- 4: Greifer
- 5: Abstreifer
- 5a: Abstreiferantrieb
- 6: Abstreifelement
- 7: Greiferhalter
- 8: Positionieranschlag
- 9: Greiferbacken
- 9a: Sauger
- 10: Zentriermittel, Aussparungen
- 11: Führungselement
- 12: Rückstellelement
- 13: Körperbeleuchtungseinheit
- 14: Greifpunktermittlungseinheit
- 15: Steuereinheit
- 16: Kamera
- 17: Sensor
- 18: Roboterarm
- 19: Körperzuführvorrichtung
- 20: Schütte
- 21: Verteilband
- 22: Ablagefläche
- 23: Wanne
- 24: Rüttelvorrichtung
- 25: Rüttelband
- 26: Rütteltisch
- 27: Ablagestation
- 28: Körperablageplätze
- 29: Ablageband
- 30: Handhabungseinheit
- 31: Überwachungssensor/Kraftsensor
- 32: Körpersensor / Waage
- 33: Puffervorrichtung
- 34: V-förmige Ablagen
- 35: Umlegevorrichtung

## Patentansprüche

1. Greifvorrichtung (3) mit zumindest einem Greifer (4) zum Greifen von bereitgestellten Körpern (2), **dadurch gekennzeichnet, dass** die Greifvorrichtung (3) zumindest einen dem Greifer (4) zugeordneten Abstreifer (5) mit wenigstens einem Abstreifelement (6) aufweist, wobei das Abstreifelement (6) in einer Abstreifbewegung zwischen einer Ausgangsstellung und einer Endstellung an dem Greifer (4) vorbei bewegbar ist, um an dem gegriffenen Körper (2) anliegende und/oder auf dem gegriffenen Körper (2) aufliegende und/oder mit diesem kollidierende Körper (2) von dem Greifer (4) und/oder von dem gegriffenen Körper (2) zu entfernen.

2. Greifvorrichtung (3) nach Anspruch 1, **dadurch gekennzeichnet, dass** die Greifvorrichtung (3) einen Abstreiferantrieb (5a) zum Antrieb des wenigstens einen Abstreifelements (6) aufweist und/oder dass das wenigstens eine Abstreifelement (6) beweglich, vorzugsweise schwenkbar, gelagert ist, insbesondere wobei eine Schwenkachse des Abstreifelements (6) in oder parallel zu einer Schließrichtung des Greifers (4) ausgerichtet ist.

3. Greifvorrichtung (3) nach Anspruch 1 oder 2, mit zumindest einem Greifer (4) zum Greifen von bereitgestellten Körpern, **dadurch gekennzeichnet, dass** der Greifer (4), insbesondere entgegen einer Zustellrichtung des Greifers (4), nachgiebig gelagert an einem Greiferhalter (7) der Greifvorrichtung (3) angeordnet ist.

4. Greifvorrichtung (3) nach einem der voranstehenden Ansprüche, **dadurch gekennzeichnet, dass** die Greifvorrichtung (3), insbesondere der Greifer (4), zumindest einen Positionieranschlag (8) aufweist, der dazu eingerichtet ist, eine Sollposition eines zu greifenden Körpers (2) an dem Greifer (4) zu definieren.

5. Greifvorrichtung (3) nach einem der voranstehenden Ansprüche, **dadurch gekennzeichnet, dass** der Greifer (4), insbesondere an wenigstens einer Greiferbacke (9), zumindest ein Zentriermittel (10), vorzugsweise in Form einer Aussparung (10) und/oder in Form paarweise korrespondierender Aussparungen (10) aufweist, wobei das Zentriermittel (10) eine Lage eines Körpers (2) relativ zu Greifbacken (9) des Greifers (4) definiert.

6. Greifvorrichtung (3) nach einem der voranstehenden Ansprüche, **dadurch gekennzeichnet, dass** Greiferbacken (9) des Greifers (4) 3D-gedruckt sind.

7. Greifvorrichtung (3) nach einem der voranstehenden Ansprüche, **dadurch gekennzeichnet, dass** wenigstens ein Greifer (4) der Greifvorrichtung (3) ein Sauggreifer ist und/oder dass der wenigstens eine Greifer (4) ein Sauggreifer ist.

8. Greifvorrichtung (3) nach einem der voranstehenden Ansprüche, **dadurch gekennzeichnet, dass** die Greifvorrichtung (3) zur nachgiebigen Lagerung des zumindest einen Greifers (4) wenigstens ein Führungselement (11) und wenigstens ein Rückstellelement (12) aufweist, die zwischen dem Greifer (4) und einem oder dem Greiferhalter (7) angeordnet sind.

9. Greifvorrichtung (3) nach einem der voranstehenden Ansprüche, **dadurch gekennzeichnet, dass** die Greifvorrichtung (3) einen Überwachungssensor (31), insbesondere einen Kraftsensor (31), und/oder eine Software zur Überwachung einer Annäherungsbewegung des wenigstens einen Greifers (4) in seine Greifposition und/oder zur Überwachung einer Antriebskraft eines Antriebs des wenigstens einen Greifers (4).

10. Greifvorrichtung (3) nach einem der voranstehenden Ansprüche, **dadurch gekennzeichnet, dass** die Greifvorrichtung (3) eine Körperbeleuchtungseinheit (13) und/oder eine Greifpunktermittlungseinheit (14), insbesondere mit wenigstens einer Kamera (16), und/oder eine Steuereinheit (15) und/oder einen Sensor (17) zur Prüfung der Anwesenheit eines gegriffenen Körpers (2) aufweist.

11. Greifvorrichtung (3) nach einem der voranstehenden Ansprüche, **dadurch gekennzeichnet, dass** ein oder der Abstreifer (5) zumindest zwei Abstreifelemente (6) aufweist, die an unterschiedlichen Seiten des Greifers (4) angeordnet sind, insbesondere wobei sich die Abstreifelemente (6) in ihrer Ausgangsstellung kreuzen, und/oder dass ein oder der Abstreifer (5) zwei Paare voneinander beanstandeter, beweglich, vorzugsweise schwenkbar, gelagerter Abstreifelemente (6) umfasst, insbesondere wobei ein Abstand zwischen den Abstreifelementen (6) eines Paares größer als eine in Abstandsrichtung messbare Abmessung des Greifers (4) ist, insbesondere wobei sich die zwei Paare von Abstreifelementen (6) in ihrer Ausgangsstellung kreuzen.

12. Greifvorrichtung (3) nach einem der voranstehenden Ansprüche, **dadurch gekennzeichnet, dass** das wenigstens eine Abstreifelement (6) in seiner Ausgangsstellung und/oder in seiner Endstellung zwischen einer durch ein freies Ende verlaufenden Querschnittsebene des Greifers (4) und einem oder dem Greiferhalter (7) angeordnet ist und dass ein distales Ende des wenigstens einen Abstreifelements (6) bei in Zwischenstellung befindlichem Abstreifelement (6) ausgehend vom freien Ende des Greifers (4) jenseits der Querschnittsebene angeordnet ist.

13. Greifvorrichtung (3) nach einem der voranstehenden Ansprüche, **dadurch gekennzeichnet, dass** ein oder der Positionieranschlag (8) zwischen Greiferbacken (9) des Greifers (4) und/oder an dem Greifer (4) angeordnet oder ausgebildet ist.

14. Greifvorrichtung (3) nach einem der voranstehenden Ansprüche, **dadurch gekennzeichnet, dass** die Greifvorrichtung (3) wenigstens einen Roboterarm (18) aufweist, an dem der Greifer (4) angeordnet ist.

15. Vereinzelungsvorrichtung (1) mit zumindest einer Greifvorrichtung (3) nach einem der voranstehenden Ansprüche.

16. Vereinzelungsvorrichtung (1) nach Anspruch 15, wobei die Vereinzelungsvorrichtung(1) eine Körperzuführvorrichtung (19) und/oder zumindest eine Ablagefläche (22) für zu vereinzelnde und/oder zu greifende Körper (2) und/oder eine Rüttelvorrichtung (24), insbesondere mit einem Rüttelband (25) und/oder mit einem Rütteltisch (26), zum Vereinzeln zu greifender Körper (2) aufweist.

17. Vereinzelungsvorrichtung (1) nach Anspruch 16, wobei eine Körperbeleuchtungseinheit (13), insbesondere die Körperbeleuchtungseinheit (13) der Greifvorrichtung (3), unterhalb der Ablagefläche (22) und/oder eine Körperbeleuchtungseinheit (13), insbesondere die Körperbeleuchtungseinheit (13) der Greifvorrichtung (3), oberhalb der Ablagefläche (22) angeordnet ist.

18. Vereinzelungsvorrichtung (1) nach einem der voranstehenden Ansprüche, wobei die Vereinzelungsvorrichtung (1) eine der Greifvorrichtung (3) nachgelagerte Ablagestation (27) mit definierten Körperablageplätzen (28) aufweist, insbesondere ein Ablageband (29), vorzugsweise wobei der Ablagestation (27) eine Handhabungseinheit (30) zum Weitertransport der vereinzelten Körper (2) zugeordnet ist.

19. Verfahren zum Greifen bereitgestellter Körper (2) mithilfe einer Greifvorrichtung (3), insbesondere mithilfe einer Greifvorrichtung (3) nach einem der voranstehenden Ansprüche, **dadurch gekennzeichnet, dass** ein für einen Greifer (4) der Greifvorrichtung (3) zugänglicher Greifpunkt eines Körpers (2) identifiziert wird, wonach der Greifer (4) den Körper (2) an dem identifizierten Greifpunkt greift, wonach zumindest ein Abstreifelement (6) eines dem Greifer (4) zugeordneten Abstreifers (5) in einer Abstreifbewegung zwischen einer Ausgangsstellung und einer Endstellung an dem Greifer (4) vorbeibewegt wird, um an dem gegriffenen Körper (2) anliegende und/oder auf dem gegriffenen Körper (2) aufliegende und/oder mit diesem kollidierende Körper (2) von dem Greifer (4) und/oder von dem gegriffenen Körper (2) zu entfernen.

20. Verfahren nach Anspruch 19, wobei die zu greifenden Körper (2) längliche Körper (2), insbesondere Bürstenkörper und/oder Zahnbürstenkörper (2) sind, und/oder wobei die zu greifenden Körper (2) als Schüttgut bereitgestellt werden.

21. Verfahren nach Anspruch 19 oder 20, wobei der Greifpunkt optisch, insbesondere mithilfe einer Kamera (16), identifiziert wird, und/oder wobei die zu greifenden Körper (2) vorvereinzelt werden, insbesondere mithilfe einer Rüttelvorrichtung (24) und/oder insbesondere dann, wenn kein frei zugänglicher Greifpunkt identifiziert wurde.

22. Verfahren nach einem der voranstehenden Ansprüche, wobei geprüft wird, ob ein Körper (2) gegriffen wurde, insbesondere mittels eines Sensors (17) und/oder durch Bestimmung einer Länge einer Schließbewegung des Greifers (4) .

23. Verwendung einer Greifvorrichtung (3) nach einem der voranstehenden Ansprüche zum Greifen länglicher Körper (2), insbesondere zum Greifen von Bürstenkörpern und/oder Zahnbürstenkörpern (2).
